# EUROPEAN PATENT SPECIFICATION

(11) **EP 3 665 135 B1**
(45) Date of publication and mention of the grant of the patent: **12.04.2023**
(21) Application number: 18855372.1
(22) Date of filing: 10.09.2018
(51) Int. Cl.: C04B 28/10, B33Y 10/00, B33Y 80/00

(54) **A BACTERIAL BIOCALCIFICATION METHOD FOR PRODUCING CONSTRUCTION MATERIALS**
BAKTERIELLES BIOKALZIFIZIERUNGSVERFAHREN ZUR HERGESTELLUNG VON BAUMATERIALIEN
PROCÉDÉ DE BIOCALCIFICATION BACTÉRIENNE POUR LA FABRICATION DE MATÉRIAUX DE CONSTRUCTION

(30) Priority: 13.09.2017 TR 201713505
(43) Date of publication of application: 17.06.2020
(73) Proprietor: Dokuz Eylul Üniversitesi Rektorlugu, 35210 Izmir (TR); Ege Universitesi, 35100 Izmir (TR)
(72) Inventor: AKYOL ALTUN, T. Didem, 35160 Izmir (TR); KOKTURK, Gulden, Buca/Izmir (TR); TOKUC, Ayca, Buca/Izmir (TR); OZKABAN, Feyzal, Buca/Izmir (TR); ANDIC CAKIR, Ozge, Izmir (TR); SENDEMIR URKMEZ, Aylin, Izmir (TR); KESKIN GUNDOGDU, Tugba, Bornova/Izmir (TR); DENIZ, Irem, Bornova/Izmir (TR)
(74) Representative: Yalçiner Patent and Consulting Ltd.
(86) International application number: PCT/TR2018/050473
(87) International publication number: WO 2019/054969

(56) References cited:
- WO-A1-2010/130712
- WO-A1-2016/010434
- US-A1- 2014 239 535
- US-B1- 8 951 786
- J. Duro-Royo ET AL: "Parametric chemistry reverse engineering biomaterial composites for additive manufacturing of bio-cement structures across scales" In: "Challenges for Technology Innovation: An Agenda for the Future", 21 April 2017 (2017-04-21), CRC Press, XP055730638, ISBN: 978-1-315-19810-1 pages 217-223, DOI: 10.1201/9781315198101-39, * Chapters 2-4; figures 1-5 *
- SCHAFFNER, MANUEL et al.: "3D printing of bacteria into functional complex materials", , vol. 3, no. 12, 2017, XP0055491174,

## Description

### Technical Field of the Invention

The invention is related to constructional, architectural, industrial materials that contain sand and fibers that are obtained by means of a bacterial biocalcification method, and products obtained by means of this method.

### Known State of the Art (Prior Art)

Nowadays architectural structures/elements, furniture, industrial products are generally produced by conventional production methods (frames, masonry, hybrid etc.) using materials such as ceramics, wood, concrete, cement and raw materials derived from petrochemicals such as plastic. Some structures are obtained by working with natural materials such as wood or stones. The resulting products obtained by chemical interventions carried out during the production and processing procedures can contain toxic materials.

The developments in the field of bioengineering and biotechnology in recent times, has brought design products that have been developed in cooperation with the fields of architecture and other engineering fields to the agenda. The bioengineering research in the new century has opened the gate to a different era for architecture and all design fields. However design studies, in which living organisms are used in the newly developing field together with biology, architecture and engineering disciplines, are still rare.

Biodesign, is working with materials that have been produced using natural and biotechnological methods that may replace chemical products that could contain toxic agents (Antonelli, 2012). Biodesign is a field of study that takes nature, which has processes that are much older and experienced than architecture and engineering fields, as an example, and aims to establish products that are sustainable, functional, long lasting and non hazardous to the human health, which can contain living organisms as a design input.

The bacterial biocalcification method, has not been developed for integration with architectural/industrial product design although it was applied to different fields such as industrial crack healing and soil improvement issues.

Said bacteria are obtained from soil, water and sludge layers, and they are non-pathogen microorganisms. The most effective urolithic bacteria strain is *Sporosarcina pasteurii.* The living conditions of this species are uncommon, since they can resist media that contain ammonium salt in high concentrations, besides high pH conditions. In several studies, urea has been used instead of ammonium salts, because these organisms have the ability to degrade urea. Due to this ability, they can produce the necessary ammonium to be used in their own metabolic activities. This ability has been discovered initially by Gibson in 1934 and has been applied in 1956 by Bornside and Kallio (Wiley and Stokes 1962).

In the recent years studies have been carried out using microbiologically induced calcium carbonate (CaCO₃) sedimentation, such as selective cementation activity, bio-mineralization of calcium carbonate (Dhami et al., 2013; Wong et al., 2015), repair, rehabilitation and reinforcement of cement systems (Sung-Jin et al., 2010; Siddique and Chahal, 2011), restoration and repairs of historical works (Bhaduri et al., 2014), filling cracks with calcite layers (Chunxiang et al., 2013), developing self-healing mechanism by means of bacterial immobilization techniques (Wiktor and Jonkers, 2011; Wang et al. 2012), geotechnical soil reinforcement (DeJong et al., 2006; Li, 2013) and eco-bio-cement production using urolithic biotechnology (Kunal et al., 2014; Cuzman et al., 2015).

In this study, the biodegradable polymers that are to be used as a structure, are not only used commonly in the production of environmentally friendly industrial products and personal hygiene products, but their advanced applications are also present in the fields of biomaterials and tissue engineering. Environmental awareness that has increased in the recent years has led to the extensive use of biodegradable polymers in the plastic sector (Nair and Laurencin, 2007).

Material chemistry, molecular weight, solubility, hydrophilicity and hydrophilicity rates, degradation mechanisms are specific features of each biopolymer and they enable said biopolymers to be differentiated from each other. The features that biodegradable polymers must contain can be summarized as follows; does not present toxic propagation to the environment, is degradable in a short span of time, has suitable mechanical features, has suitable permeability (Lloyd, 2002).

Frequently used natural polymers in tissue engineering up to today are chitosan, agarose and fibronectin. Even though these natural polymers are suitable in terms of cytotoxicity, their resistance to high temperatures in three dimensional printers is limited. In some studies that have been carried out, it has been observed that in order for the biodegradable polymers to be brought to a state such that they can be printable with a 3 dimensional printer, said polymers were reinforced with starch (Amoabediny et al. 2015).

US8951786 B1 discloses a method for producing construction materials by 3D printing an enzyme and calcium ions comprising solution on a substrate of loose pieces of aggregate.

In the known state of the art, even though the bacterial biocalcification method has different usages and applications; in this invention, immobilization is carried out by means of attaching bacteria onto a biopolymer composite structure that is used as a support and an architectural/structural/industrial material/product is generated with an urease mechanism.

### Brief Description of the Invention and Its Aims

In this invention architectural/structural/industrial product or elements are produced by using some bacteria species that enable the hardening of structures -such as sand or soil- by means of bacterial biocalcification on a bio-structure generated by a 3 dimensional (3D) printer, or in other words by calcium carbonate (CaCO₃) sedimentation, with joint work of bioengineering, construction engineering and architectural disciplines to develop architectural/municipal/industrial design products.

The invention;
- has the ability to be designed, produced and applied modularly, due to its 3D printing technology,
- provides a novel and different method that is specifically used in the production of small scale architectural/structural/industrial materials/products (children's playgrounds, sitting groups, kiosks, and exhibition stands),
- enables the production of ecological products that are natural and simple due to their design qualities, and non-toxic by means of a production process or method,
- enables the production of ecological bio-design products that are suitable for public health by means of scientific and technical cooperation established within the intersection of bioengineering, construction engineering and architecture.

### Definitions of the Figures Describing the I nvention

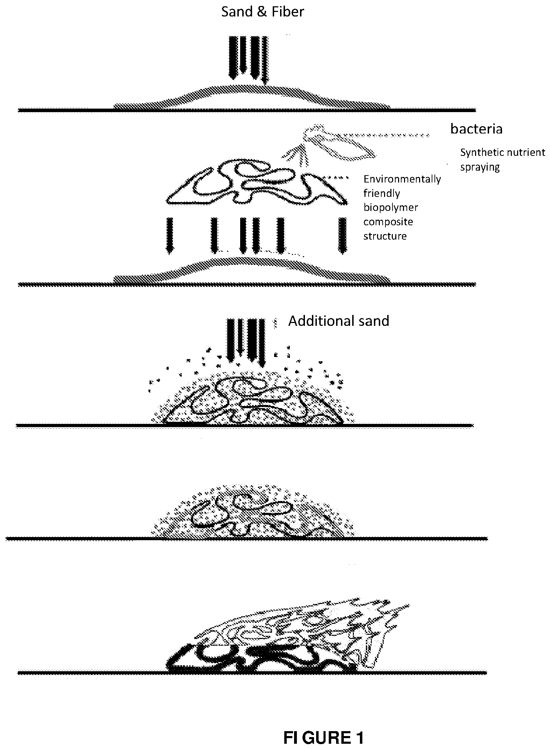

**Figure 1****:** Production steps of the construction material.#

### Detailed Description of the I nvention

In the invention, a structural and/or architectural material/product comprising of sand and natural fibers is obtained by means of a bacterial biocalcification method applied onto a biodegradable structure. In this context, ecological bio-design products, which are suitable for public health, have genuine biodegradable composite structures that have the basis of solidifying sand may be obtained by bacteria species such as *Sporosarcina pasteurii, Bacillus arenosi, Sporosarcina urea, Brevibacterium ammoniagenes, Bacillus lentus, Proteus vulgaris, Myxococcus Xanthus* or *Helicobacter pylori.*

In the invention the solidification of various sand types to obtain these ecological bio-designs is provided by using the urease metabolism that has been established through the sedimentation of calcium carbonate (CaCO₃) and immobilizing these bacteria -preferably *Sporosarcina pasteurii* as it is the most effective urolithic bacteria- onto an authentic design that is formed of a biodegradable polymer composite incorporating **natural or synthetic** fibers that has been printed out of a 3D printer.

The solidification mechanism is as follows:
- 1 mol of urea added to the medium of *Sporosarcina pasteurii* turns into 2 mol ammonium and 1 mol carbon dioxide (CO₂) through the microbial catalysis mechanism

   CO(NH₂)₂+H₂O→NH₂COOH+NH₃

   NH₂COOH+H₂O→2NH₃+CO₂+H₂O
- The pH of the structure increases by the spraying of this medium.
- Ca⁺²(calcium ion) is released from the calcium chloride (CaCl₂) compound that has been added to the medium as a result of enzymatic reaction.
- Calcium carbonate (CaCO₃) is precipitated with the combination of the calcium ion (Ca⁺²) and carbonate (CO₃⁻²) located inside the structure of the sand and thereby, the sand solidifies.

   CO₂+H₂O↔H₂CO₃↔HCO₃⁻+H⁺↔CO₃⁻²+2H⁺

   CO₃⁻²+Ca⁺²→CaCO₃

In the invention, bio-composite production is carried out by a novel method, by burying the bacteria loaded biodegradable composite structure into the sand and fiber mixture.

Said constructional/architectural/industrial material production method comprises of the steps of;
i) Obtaining a structure from a 3D printer that is formed from an environmentally friendly biodegradable polymer composite containing fibers,
ii) Immobilizing the bacteria and nutrients successively onto or into the said structure,
iii) Embedding the structure carrying the bacteria into sand and fiber mixture,
iv) Waiting for the bacteria to spread around the structure in order to turn the sand and fiber mixture into a fibrous sandstone composite structure (cementation process).
v) Removing the sand that has not taken part in the cementation following the cementation process.

In the said method, a waiting period of at least 24 hours is required for the cementation process to occur. During this process, while the bacteria spreads around the structure and turns the sand and fiber mixture into a solidified sandstone composite structure, after some time the nutrients in the medium diminish and bacteria die. Following the completion of the cementation process, the sand that has not turned into the sandstone composite structure is removed. As a result the product that remains is natural and does not contain toxic agents.

The fiber mentioned in the invention can be synthetic or natural.

These construction materials that have been obtained using the method of the invention can be used in all kinds of structural or architectural areas, furniture, playgrounds, industrial areas etc.

### References

Aldo Van Eyck: Designing For Children, Playgrounds (Edt. Liane Lefaivre and Ingeborg de Roode), Stedelijk Museum, Amsterdam, 2002
Amoabediny G., Heli B., Salehi-Nik N, The Role of Biodegradable Engineered Scaffold in Tissue Engineering, INTECH Open Access Publisher, 122-131, 2011.
Llyod A. W. Interfacacial Bioengineering to Enhance Surface Biocompatibility, Med. Device Technol., 13:18-21, 2002.
Nair L.S., Laurencin CT, Polymers as Biomaterials for Tissue Engineering and Controlled Drug Delivery. In: Lee K, Kaplan D, editors. Tissue Engineering I. Springer. 47-90, 2006.
Çukur D., Özgüner H., Kentsel Alanda Çocuklara Doga Bilinci Kazandirmada Oyun Mekânι Tasarιmιnιn Rolü, Süleyman Demirel Üniversitesi Orman Fakültesi Dergisi Seri: A, Sayι: 2, Yιl: 2008, ISSN: 1302-7085, 177-187, 2008.
Fjørtoft I, Landscape as Playscape: The Effects of Natural Environments on Children's Play and Motor Development, Children, Youth and Environments, Vol. 14, No. 2, Collected Papers, 21-44, 2004.
Fjørtoft I, Sageie J. Thenatural environment as a playground forchildren: Landscape description and analyses of a natural playscape, Landscape and Urban Planning, volume 48, Issues 1-2, 20, 83-97, 2000.
May G., Simonon L., Permacultureplaygrounds. Playlines. 8(21), 2000.
Senda M. Design of Children's Play Environments, McGraw-Hill: Inc.New York, 1992.
Sipes J L, Roberts J M, Playground surfaces: Safety and accesibilitiy, Landscape Architecture, 1994.
DeJong, J.T.,Fritzges, M.B., Nüsslein, K.,. Microbially Induced Cementation to Control Sand Response to Undrained Shear. Journal of Geotechnical And Geo-environmental Engineering, 132 (11), 1381-1392, 2006.
Li, S.,. A laboratory study of the effects of bio-stabilization on geomaterials. MS Thesis, Civil Engineering (Geotechnical Engineering), Iowa State University, Ames, Iowa,2013
Bhaduri S., Mitra S K, Kumar A. Understanding Biofilm Growth Dynamics Within a Stagnant Culture of Sporosarcina Pasteurii, ASME 2014 International Mechanical Engineering Congress and Exposition, Volume 3: Biomedical and Biotechnology Engineering, Montreal, Quebec, Canada, November 14-20, 2014
Wiley W R & Stokes S L, Requirements of an alkaline pH and ammonia for substrate oxidation by Bacillus Pasteurii, Journal of Bacteriology, 84, 730-733, 1962
Dhami N K, Reddy M S, Mukherjee A, Biomineralization of calcium carbonates and their engineered applications: a review. Front. Microbiol. 4 (1-3), http://dx.doi.org/10.3389/fmicb.2013.00314., 2013
Wong L S, Microbial cementation of urolithic bacteria from the genus Bacillus: a review of the bacterial application on cement-based materials for cleaner production. J. Clenear Prod. 93, 5-17, http://dx.doi.org/10.1016/j. jclepro.2015.01.019, 2015
Antonelli P, Editor: William Myers, Biodesign; Nature, Science, Creatibility, The museum of modern arts; Thomas and Hudson, London, 1-3, 2013.
Kunal S, Iddique R, Rajor A, Strength and micro structure analysis of bacterial treated cement kiln dust mortar. Constr. Build. Mater. 63, 49-55, http://dx.doi.org/10.1016/j.conbuildmat.2014.04.011, 2014
Chunxiang Q, Jianyun W, Ruixing W, Liang C, Corrosion protection of cement-based building materials by surface deposition of CaCO3 by Bacillus pasteurii. Mater. Sci. Eng. C 29, 1273-1280, http://dx.doi.org/10.1016/j.msec. 2008.10.025, 2013
Cuzman OA, Richter K, Wittig L, Tiano P, Alternative nutrient sources for biotechnological use of Sporosarcina pasteurii. World J. Microbiol. Biotechnol. 31, 897-906, http://dx.doi.org/10.1007/s11274-015-1844-z, 2015
Siddique, R.,Chahal, N.K., Effect of urolithic bacteria on concrete properties. Constr. Build. Mater. 25, 3791-3801, http://dx.doi.org/10.1016/j.conbuildmat. 2011.04.010., 2011
Sung-Jin, P., Park, Y.-M., Chun, W.-Y., Kim, W.-J., Ghim, S.-Y., Calcite-forming bacteria for compressive strength improvement in mortar. J. Microbiol. Biotechnol. 20, 782-788, http://dx.doi.org/10.4014/jmb.0911.11015, 2010.
Wang, J., Tittelboom, K.V., De Belie, N., Vertraete, W., Use of silica gel polyurethane immobilized bacteria for self-healing concrete. Constr. Build. Mater. 26, 532-540, http://dx.doi.org/10.1016/j.conbuildmat.2011.06.054, 2012.
Wiktor, V., Jonkers, H.M., Quantification of crack-healing in novel bacteria-based self-healing concrete. Cem. Concr. Compos. 33, 763-770, http:// dx.doi.org/10.1016/j.cemconcomp.2011.03.012, 2011.

## Claims

1. A bacterial biocalcification method for producing constructional/architectural/industrial materials, **characterized by** comprising the steps of;
i) Obtaining a structure from a 3 dimensional (3D) printer that is formed from an environmentally friendly biodegradable polymer composite containing fibers,
ii) Immobilizing bacteria and nutrients by spraying on or impregnating in the biodegradable structure successively onto or into the said structure,
iii) Embedding the structure carrying the bacteria into sand and fiber mixture,
iv) Waiting for the bacteria to spread around the structure in order to turn the sand and fiber mixture into a fibrous sandstone composite structure (cementation process).
v) Removing the sand that has not turned into sandstone following the cementation process.

2. A method according to claim 1, **characterized in that** the biodegradable structure is macro, micro or nano sized.

3. A method according to claim 1, wherein the said fiber is natural or synthetic fiber.

4. A method according to claim 1 **characterized in that** the bacteria are selected from the group of *Sporosarcina pasteurii, Bacillus arenosi, Sporosarcina urea, Brevibacterium ammoniagenes, Bacillus lentus, Proteus vulgaris, Myxococcus Xanthus* and *Helicobacter pylori.*

5. A method according to claim 1, **characterized in that**; in step (iv) a waiting period of at least 24 hours is required.

## Patentansprüche

1. Bakterielles Biokalzifizierungsverfahren zur Herstellung von Bau-/Architektur-/Industriematerialien, **dadurch gekennzeichnet, dass** es die folgenden Schritte umfasst;
i) Erhalten einer Struktur aus einem 3-dimensionalen (3D) Drucker, die aus einem umweltfreundlichen, biologisch abbaubaren, Fasern enthaltenden Polymerverbundstoff gebildet ist,
ii) Immobilisieren der Bakterien und Nährstoffe durch Aufsprühen oder Imprägnieren in der biologisch abbaubaren Struktur nacheinander auf oder in diese Struktur,
iii) Einbetten der bakterientragenden Struktur in die Sand- und Fasermischung,
iv) Warten auf die Ausbreitung der Bakterien in der Struktur, um die Sand- und Fasermischung in eine faserige Sandsteinverbundstruktur zu verwandeln (Zementierungsprozess).
v) Entfernen des Sands, der sich nach dem Zementierungsprozess nicht in Sandstein verwandelt hat.

2. Verfahren nach Anspruch 1, **dadurch gekennzeichnet, dass** die biologisch abbaubare Struktur in Makro-, Mikro- oder Nanogröße vorliegt.

3. Verfahren nach Anspruch 1, wobei die genannte Faser eine natürliche oder synthetische Faser ist.

4. Verfahren nach Anspruch 1, wobei die Bakterien ausgewählt sind aus der Gruppe von *Sporosarcina pasteurii, Bacillus arenosi, Sporosarcina urea, Brevibacterium ammoniagenes, Bacillus lentus, Proteus vulgaris, Myxococcus Xanthus et Helicobacter pylori.*

5. Verfahren nach Anspruch 1, **dadurch gekennzeichnet, dass** in Schritt (iv) eine Wartezeit von mindestens 24 Stunden erforderlich ist.

## Revendications

1. Procédé de biocalcification bactérienne pour produire des matériaux de construction/architecture/industrie, **caractérisé en ce qu'**il comprend les étapes suivantes ;
i) Obtenir une structure à partir d'une imprimante en 3 dimensions (3D) qui est formée d'un composite polymère biodégradable respectueux de l'environnement contenant des fibres,
ii) Immobiliser les bactéries et les nutriments par pulvérisation sur ou imprégnation dans la structure biodégradable successivement sur ou dans ladite structure,
iii) Incorporer la structure portant les bactéries dans le mélange de sable et de fibres,
iv) Attendre que les bactéries se répandent autour de la structure afin de transformer le mélange de sable et de fibres en une structure composite de grès fibreux (processus de cimentation).
v) Retirer le sable qui ne s'est pas transformé en grès après le processus de cimentation.

2. Procédé selon la revendication 1, **caractérisé en ce que** la structure biodégradable est de taille macro, micro ou nano.

3. Procédé selon la revendication 1, dans lequel ladite fibre est une fibre naturelle ou synthétique.

4. Procédé selon la revendication 1, **caractérisé en ce que** les bactéries sont choisies dans le groupe de *Sporosarcina pasteurii, Bacillus arenosi, Sporosarcina urea, Brevibacterium ammoniagenes, Bacillus lentus, Proteus vulgaris, Myxococcus Xanthus et Helicobacter pylori.*

5. Procédé selon la revendication 1, **caractérisé en ce que** ; à l'étape (iv), une période d'attente d'au moins 24 heures est requise.
